# EUROPEAN PATENT APPLICATION

(11) **EP 4 397 618 A1**
(43) Date of publication of application: **10.07.2024**
(21) Application number: 22864479.5
(22) Date of filing: 29.08.2022
(51) Int. Cl.: B81B 1/00, B29C 33/38, B29C 45/26, G01N 37/00

(54) **MICROCHANNEL CHIP**

(30) Priority: 31.08.2021 JP 2021141725
(71) Applicant: Sumitomo Bakelite Co.Ltd., Shinagawa-ku Tokyo 140-0002 (JP)
(72) Inventor: YAKUMARU Kosuke, Tokyo 140-0002 (JP)
(74) Representative: Ter Meer Steinmeister & Partner
(86) International application number: PCT/JP2022/032367
(87) International publication number: WO 2023/032896

(57) **Abstract**

A microchannel chip (1) includes a resin substrate (2) manufactured using a mold formed by direct engraving, and including a channel groove (21) on one surface of the resin substrate (2); and a covering material (3) joined to the resin substrate (2) to cover the channel groove (21). In the resin substrate (2), the roundness of a corner (2c) formed at a boundary between a joint surface (2a) to the covering material (3) and an inner surface (2b) defining the channel groove (21) is R5 µm or less.

## Description

### Technical Field

The present invention relates to a microchannel chip.

Priority is claimed on Japanese Patent Application No. 2021-141725, filed on August 31, 2021, the content of which is incorporated herein by reference.

### Background Art

In recent years, in the field of chemical industry (particularly, pharmaceutical industry related to the manufacture of pharmaceuticals, reagents, or the like), the development of a microchannel chip using a microcontainer called a micromixer or a microreactor has been underway. The microchannel chip is provided with a plurality of microchannels (microcavity connected to the microchannels). A plurality of types of fluids are converged in the microcavity through the microchannels, thereby mixing the plurality of types of fluids or causing a chemical reaction together with the mixing.

As such a microchannel chip, for example, Japanese Unexamined Patent Application, First Publication No. 2015-199340 (Patent Document 1) discloses a microchannel chip including a resin substrate including channel grooves on one surface of the resin substrate and a covering material joined to the resin substrate to cover the channel grooves. The resin substrate including the channel grooves can be formed by, for example, injection molding using a mold, and in this way, the microchannel chip can be manufactured at low cost.

One example of a method for forming such a mold is a direct engraving method. However, in the mold formed by direct engraving, normally, corners may be rounded, and corners of a resin substrate manufactured using such a mold may also be rounded. In a case where the corners (particularly, corners of edges of channel grooves) of the resin substrate are rounded, there is a possibility that microspaces remain at the portions when a covering material is joined, which causes bubbles to be generated in channels.

### Citation List

### Patent Literature

[Patent Document 1] Japanese Unexamined Patent Application, First Publication No. 2015-199340

### Summary of Invention

### Technical Problem

The present invention has been made in view of the above-described problems, and an object of the present invention is to make it difficult for bubbles to be generated in a channel while manufacturing a microchannel chip at low cost, by forming a resin substrate including a channel groove using a mold formed by direct engraving.

### Solution to Problem

In order to solve the above-described problems, the present invention adopts the following configurations.
[1] A microchannel chip includes a resin substrate manufactured using a mold formed by direct engraving, and including a channel groove on one surface of the resin substrate; and a covering material joined to the resin substrate to cover the channel groove. In the resin substrate, the roundness of a corner formed at a boundary between a joint surface to the covering material and an inner surface defining the channel groove is R5 µm or less.
[2] In the microchannel chip according to [1], when a load deflection temperature of a resin material forming the resin substrate is T1, the resin substrate is formed by injecting a molten resin into a cavity space formed in the mold heated to a temperature of (T1 - 20°C) or more and T1 or less.
[3] In the microchannel chip according to [1] or [2], when a glass transition temperature of a resin material forming the resin substrate is Tg, the resin substrate is formed by injecting a molten resin heated to a temperature of (Tg + 130°C) or more and (Tg + 160°C) or less into a cavity space formed in the mold.
[4] In the microchannel chip according to any one of [1] to [3], the resin substrate is formed by injecting a molten resin into a cavity space formed in the mold at an injection pressure of 90 MPa or more and 120 MPa or less.

### Advantageous Effects of Invention

According to the present invention, it is possible to make it difficult for bubbles to be generated in a channel while manufacturing the microchannel chip at low cost, by forming the resin substrate including the channel groove using the mold formed by direct engraving.

### Brief Description of Drawings

FIG. 1 is a schematic cross-sectional view of a microchannel chip according to the present embodiment.
FIG. 2 is a schematic cross-sectional view of a mold for manufacturing the microchannel chip according to the present embodiment.
FIG. 3 is a schematic cross-sectional view showing one aspect of a process of manufacturing the mold for manufacturing the microchannel chip according to the present embodiment.
FIG. 4 is a schematic cross-sectional view showing one aspect of a molding step for the microchannel chip according to the present embodiment.
FIG. 5 is a schematic cross-sectional view showing one aspect of the molding step for the microchannel chip according to the present embodiment.
FIG. 6 is a schematic cross-sectional view showing one aspect of an assembly step for the microchannel chip according to the present embodiment.

### Description of Embodiments

Hereinafter, an embodiment of the present invention will be described using the drawings. The embodiment to be described below is merely one example for facilitating understanding of the present invention, and does not limit the present invention. Namely, shapes, dimensions, disposition, and the like of members to be described below can be changed and improved without departing from the concept of the present invention, and the present invention includes equivalents thereof.

In addition, in all the drawings, the same components are denoted by the same reference signs, and duplicate descriptions will be omitted as appropriate.

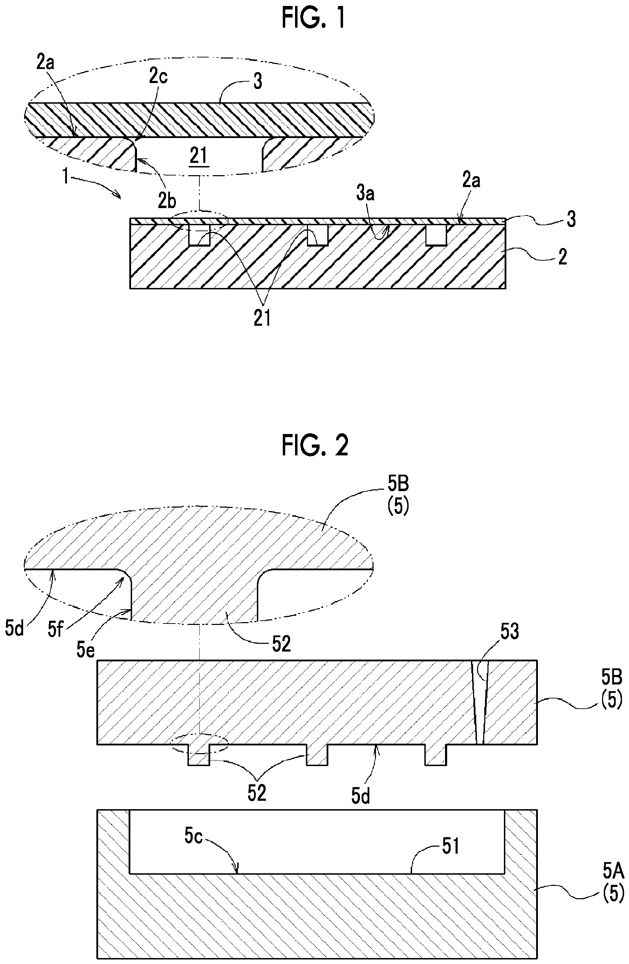

A microchannel chip according to the present embodiment will be described with reference to the drawings. As shown in FIG. 1, a microchannel chip 1 of the present embodiment includes a resin substrate 2 and a covering material 3 joined to the resin substrate 2.

As the resin forming the resin substrate 2, a resin having excellent heat resistance and transparency can be appropriately selected. The resin substrate 2 can be made of, for example, a resin selected from the group consisting of polycarbonate, a cycloolefin copolymer, a cycloolefin polymer, polymethylpentene, polystyrene, polymethyl (meth)acrylate, and polyethylene terephthalate.

The resin substrate 2 includes channel grooves 21 on one surface of the resin substrate 2 (in the present embodiment, a joint surface 2a to the covering material 3). The number of the channel grooves 21 may be one or plural. In a case where a plurality of the channel grooves 21 are provided, the channel grooves 21 may be provided in series or may be provided in parallel. In addition, the channel groove 21 may include a branch. The channel grooves 21 may have, for example, a width of 1 mm or less and a depth of 0.01 mm or more and 0.5 mm or less. In this way, experiments and the like can be performed on a microscale.

The outer shape and size of the resin substrate 2 can be appropriately set in consideration of handleability, analysis compatibility (compatibility with analysis methods and analysis devices), or the like. In the case of, for example, a quadrilateral shape (square shape or rectangular shape), for example, one side is preferably 10 mm or more and 200 mm or less and more preferably 10 mm or more and 150 mm or less. The outer shape of the resin substrate 2 may be other polygonal shapes, a circular shape, an elliptical shape, or the like.

The covering material 3 can be formed of, for example, a resin film, a resin plate, or the like. As the resin forming the covering material 3, a resin having excellent heat resistance and transparency can be appropriately selected. The covering material 3 can be made of, for example, a resin selected from the group consisting of polycarbonate, a cycloolefin copolymer, a cycloolefin polymer, polymethylpentene, polystyrene, polymethyl (meth)acrylate, and polyethylene terephthalate. The resin forming the covering material 3 may be the same resin as the resin forming the resin substrate 2, or may be a different resin.

The thickness of the covering material 3 is not particularly limited, and can be set to, for example, 0.01 mm or more and 1 mm or less. By setting the thickness to 0.01 mm or more, it becomes difficult for wrinkles or the like to occur during joining, and the channel grooves 21 can be sufficiently sealed. In addition, by setting the thickness to 1 mm or less, excellent followability to irregularities of the resin substrate 2 can be obtained.

The resin substrate 2 and the covering material 3 are laminated such that the joint surface 2a of the resin substrate 2 (surface on which the channel grooves 21 are formed) and a joint surface 3a which is one surface of the covering material 3 are in contact with each other. The covering material 3 is joined to the resin substrate 2 to cover the channel grooves 21. In this way, microchannels formed of the channel grooves 21 are formed between the resin substrate 2 and the covering material 3. The microchannel chip 1 can be suitably used as, for example, a biochip such as a nucleic acid chip, a protein chip, an antibody chip, an aptamer chip, or a glycoprotein chip or a microanalysis chip for various chemical analyses.

The microchannel chip 1 of the present embodiment is characterized in that in the resin substrate 2, a roundness of a corner 2c (refer to FIG. 1) formed at a boundary between the joint surface 2a to the covering material 3 and an inner surface 2b defining each channel groove 21 is R5 µm or less. In a case where the roundness of the corner 2c is more than R5 µm, when the covering material 3 is joined to the resin substrate 2, there is a possibility that a microspace remains at the portion of the corner 2c, which causes bubbles to be generated in the channel. In this respect, by setting the roundness of the corner 2c to R5 µm or less as in the present embodiment, the resin substrate 2 also including edges of the channel grooves 21 and the covering material 3 can be firmly brought into close contact with each other when the covering material 3 is joined to the resin substrate 2. As a result, almost no microspace remains between the resin substrate 2 and the covering material 3, and in the microchannel chip 1 finally obtained, it can be made difficult for bubbles to be generated in the channels.

The roundness of the corner 2c at the boundary between the joint surface 2a to the covering material 3 and the inner surface 2b defining each channel groove 21 is preferably R4.8 µm or less, more preferably R4.6 µm or less, and still more preferably R4.4 µm or less. According to this setting, it can be made more difficult for bubbles to be generated in the channels.

The microchannel chip 1 of the present embodiment can be manufactured using a mold 5 for injection molding and a hot press machine. For example, the microchannel chip 1 can be manufactured by creating the resin substrate 2 using the mold 5 (molding step), and by thermally compressing the resin substrate 2 and the covering material 3 separately created using a hot press machine (assembly step). The microchannel chip 1 can also be manufactured by affixing together the resin substrate 2 and the covering material 3 using an adhesive, a pressure-sensitive adhesive, a pressure-sensitive adhesive film, or the like.

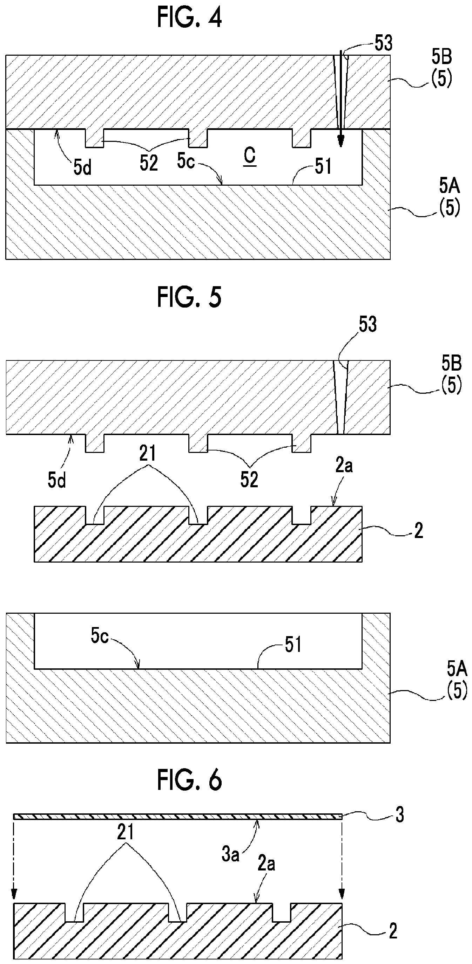

As shown in FIG. 2, the mold 5 includes a first mold 5A including a recessed portion 51 and a second mold 5B including ridge portions 52. The recessed portion 51 corresponds to the outer shape of the resin substrate 2. The ridge portion 52 corresponds to the inner surface shape of the channel groove 21. When the first mold 5A and the second mold 5B are mold-clamped, a cavity space C is formed as a space surrounded by an inner surface (first inner surface 5c) of the recessed portion 51 and an inner surface (second inner surface 5d) around portions of the second mold 5B at which the ridge portions 52 are formed (refer to FIG. 4). A gate 53 communicating with the cavity space C is also formed in the second mold 5B.

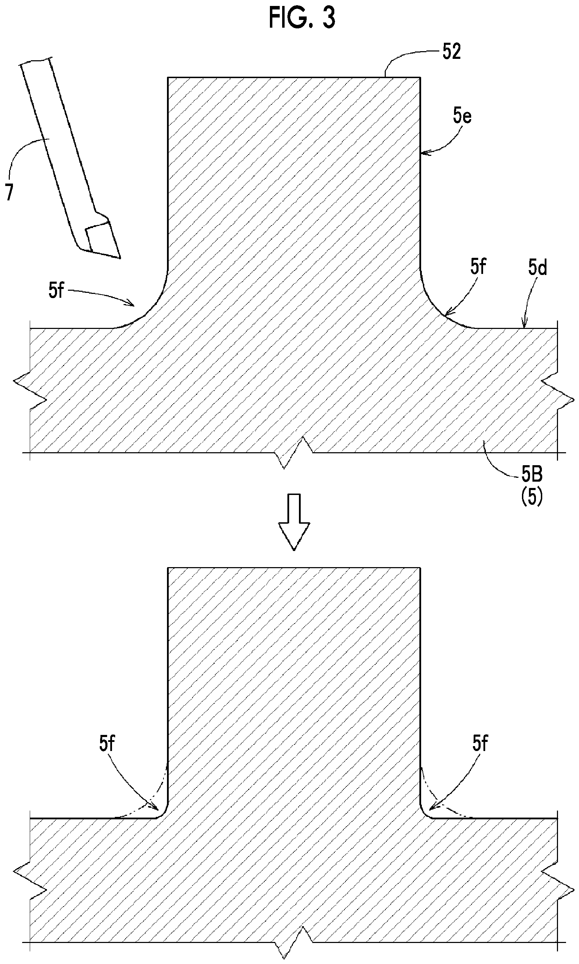

In the present embodiment, as the mold 5 used for the injection molding of the resin substrate 2, a mold formed by direct engraving instead of electroforming is used. The direct engraving is a processing method that creates a mold by cutting a metal block, and can be performed using, for example, a numerical control (NC) milling machine or the like. In the mold 5 formed by such direct engraving (here, particularly, the second mold 5B including the ridge portions 52), as shown at the upper part of FIG. 3, normally, a roundness remains at a corner 5f between the second inner surface 5d and an outer surface 5e of the ridge portion 52 in the second mold 5B. The roundness of the corner 5f is, for example, R10 µm or more, and typically, can be R20 µm or more.

In the present embodiment, in manufacturing the mold 5, after normal direct engraving is performed, as shown in FIG. 3, corner chamfering is further performed such that the corner 5f between the second inner surface 5d and the outer surface 5e of the ridge portion 52 is close to a right angle. The corner chamfering can be performed using a cornering tool 7. The roundness of the corner 5f between the second inner surface 5d and the outer surface 5e of the ridge portion 52 is set to, for example, R5 µm or less by performing corner chamfering. The roundness of the corner 5f is preferably set to R4.8 µm or less, more preferably R4.6 µm or less, and still more preferably R4.4 µm or less.

The resin substrate 2 including the channel grooves 21 on the one surface is formed by using the mold 5 obtained in this way (molding step). In the molding step, as shown in FIG. 4, the first mold 5A and the second mold 5B are mold-clamped, and the molten resin is injected from the gate 53 into the cavity space C formed therebetween.

The temperature of the mold 5 used in the molding step is not particularly limited, and when the load deflection temperature of the resin material forming the resin substrate 2 under a high load (1.8 MPa) is T1 [°C], for example, the temperature of the mold 5 is preferably (T1 - 20°C) or more and (T1°C) or less, more preferably (T1 - 15°C) or more and (T1°C) or less, and still more preferably (T1 - 10°C) or more and (T1°C) or less. According to this configuration, from the viewpoint of optimizing molding conditions related to the mold temperature, it can be made more difficult for bubbles to be generated.

The load deflection temperature can be measured in accordance with JIS K7191-1A method.

When the temperature of the mold 5 is less than the above-described lower limit value, there is a possibility that due to a rapid decrease in the temperature of the molten resin after injection, the fluidity of the molten resin decreases and the followability to the mold 5 is impaired. On the other hand, when the temperature of the mold 5 is greater than the above-described upper limit value, energy consumption increases and cooling also takes time, which may lead to a decrease in productivity. Therefore, the resin substrate 2 having a desired shape can be obtained with excellent productivity by setting the mold temperature within the above-described range.

The temperature of the molten resin injected into the mold 5 in the molding step is not particularly limited, and when the glass transition temperature of the resin material forming the resin substrate 2 is Tg [°C], for example, the temperature of the molten resin is preferably (Tg + 130°C) or more and (Tg + 160°C) or less, more preferably (Tg + 130°C) or more and (Tg + 155°C) or less, and still more preferably (Tg + 130°C) or more and (Tg + 150°C) or less. According to this configuration, from the viewpoint of optimizing molding conditions related to the resin temperature, it can be made more difficult for bubbles to be generated.

When the temperature of the molten resin is less than the above-described lower limit value, there is a possibility that the fluidity is not sufficient and the followability to the mold 5 is impaired. On the other hand, when the temperature of the molten resin is greater than the above-described upper limit value, the effect of improving the fluidity is limited even though energy consumption increases. Therefore, the resin substrate 2 having a desired shape can be obtained with excellent productivity by setting the resin temperature within the above-described range.

The injection pressure when the molten resin is injected into the mold 5 in the molding step is not particularly limited, and for example, is preferably 90 MPa or more and 120 MPa or less, more preferably 95 MPa or more and 120 MPa or less, and still more preferably 100 MPa or more and 120 MPa or less. According to this configuration, from the viewpoint of optimizing molding conditions related to the injection pressure, it can be made more difficult for bubbles to be generated.

When the injection pressure of the molten resin is less than the above-described lower limit value, there is a possibility that the molten resin does not spread throughout the cavity space C and the followability to the mold 5 is impaired. On the other hand, when the injection pressure of the molten resin is greater than the above-described upper limit value, the effect of improving the followability to the mold 5 is limited even though energy consumption increases. Therefore, the resin substrate 2 having a desired shape can be obtained with excellent productivity by setting the injection pressure of the molten resin within the above-described range.

When the mold is opened after cooling, as shown in FIG. 5, the resin substrate 2 in which the channel grooves 21, each having an outer shape corresponding to the recessed portion 51 of the first mold 5A and having an inner surface corresponding to the ridge portion 52 of the second mold 5B, are formed on the one surface is obtained. At this time, since the mold 5 subjected to corner chamfering in addition to normal direct engraving is used, the resin substrate 2 in which the roundness of the corner 2c (refer to FIG. 1) formed at the boundary between the joint surface 2a to the covering material 3 and the inner surface 2b defining each channel groove 21 is suppressed to R5 µm or less can be obtained.

Thereafter, the resin substrate 2 obtained in the molding step and the covering material 3 separately created are laminated and joined together (assembly step). In the assembly step, first, as shown in FIG. 6, the covering material 3 is laminated on the resin substrate 2 to cover the channel grooves 21. Thereafter, the laminate is placed the laminate in a hot press machine, and the resin substrate 2 and the covering material 3 are joined together by thermocompression. The hot press machine includes a first block and a second block that sandwiches and compresses the laminate of the resin substrate 2 and the covering material 3 between the first block and the second block. Each of the first block and the second block includes a built-in heater.

As described above, in the resin substrate 2 obtained in the molding step of the present embodiment, the roundness of the corner 2c at the boundary between the joint surface 2a and the inner surface 2b of each channel groove 21 is suppressed to R5 µm or less. For this reason, when the resin substrate 2 and the covering material 3 are joined together, the resin substrate 2 including the edges of the channel grooves 21 and the covering material 3 firmly come into close contact with each other. Accordingly, almost no microspace remains between the resin substrate 2 and the covering material 3 (particularly, the portions of the edges of the channel grooves 21). Therefore, it can be made difficult for bubbles to be generated in the channels of the microchannel chip 1.

The microchannel chip has been described above in detail by showing a specific embodiment; however, the present invention is not limited thereto. The embodiment disclosed in the present specification is provided as an example in all respects, and can be modified as appropriate without departing from the concept of the present disclosure.

### Industrial Applicability

By forming the resin substrate including the channel grooves using the mold formed by direct engraving, it is possible to make it difficult for bubbles to be generated in the channels while manufacturing the microchannel chip at low cost.

### Reference Signs List

1: Microchannel chip
2: Resin substrate
2a: Joint surface
2b: Inner surface
2c: Corner
3: Covering material
3a: Joint surface
5: Mold
5A: First mold
5B: Second mold
5c: First inner surface
5d: Second inner surface
5e: Outer surface
5f: Corner
21: Channel groove
51: Recessed portion
52: Ridge portion
53: Gate
C: Cavity space

## Claims

1. A microchannel chip comprising:
a resin substrate manufactured using a mold formed by direct engraving, and including a channel groove on one surface of the resin substrate; and
a covering material joined to the resin substrate to cover the channel groove,
wherein in the resin substrate, a roundness of a corner formed at a boundary between a joint surface to the covering material and an inner surface defining the channel groove is R5 µm or less.

2. The microchannel chip according to claim 1,
wherein when a load deflection temperature of a resin material forming the resin substrate is T1, the resin substrate is formed by injecting a molten resin into a cavity space formed in the mold heated to a temperature of (T1 - 20°C) or more and T1 or less.

3. The microchannel chip according to claim 1 or 2,
wherein when a glass transition temperature of a resin material forming the resin substrate is Tg, the resin substrate is formed by injecting a molten resin heated to a temperature of (Tg + 130°C) or more and (Tg + 160°C) or less into a cavity space formed in the mold.

4. The microchannel chip according to claim 1 or 2,
wherein the resin substrate is formed by injecting a molten resin into a cavity space formed in the mold at an injection pressure of 90 MPa or more and 120 MPa or less.
